# EUROPEAN PATENT APPLICATION

(11) **EP 1 215 605 A1**
(43) Date of publication of application: **19.06.2002**
(21) Application number: 01129522.7
(22) Date of filing: 11.12.2001
(51) Int. Cl.: G06F 17/60

(54) **Contents distribution system**

(30) Priority: 18.12.2000 JP 2000383701
(71) Applicant: YAMAHA CORPORATION, Hamamatsu-shi Shizuoka-ken (JP)
(72) Inventor: Hasegawa, Yutaka, Yamaha Corporation, Hamamatsu-shi, Shizuoka-ken (JP)
(74) Representative: Kehl, Günther, Dipl.-Phys.

(57) **Abstract**

A system is designed for managing an information service which handles distribution of digital contents and presentation of advertising messages to users over a computer network. In the system, a first database stores advertising messages provided from advertisers who subscribe the information service with payment of advertisement fees. A second database stores a plurality of digital contents, which are subject to legal protection on behalf of content proprietors. A server presents the advertising messages over the computer network to the users who use the information service. The server distributes the digital contents to the users upon request from the users over the computer network. The sever allocates at least a part of the advertisement fees collected from the subscribing advertisers to the content proprietors of the digital contents distributed to the users.

## Description

### BACKGROUND OF THE INVENTION

This invention relates to a content distribution system, content distribution method, storage medium storing a computer program of content distribution, and computer program, which enable a user to upload and download contents free of charge, without any illegal infringement on rights of proprietors related to the contents distributed via communication networks.

As use of the Internet with a personal computer, a mobile telephone or other terminal equipment is being popularized, and files described in HTML (hyper text markup language) are browsed (namely, "opening homepage") with a browser or the like on user terminals via a server supporting HTTP (hyper text transfer protocol), thereby realizing various information transmission or various data distribution. For example, there are existing services such as an information transmission at an individual level, a data download via a network, and a search for information, including a case of realizing a business by permitting a download of a content in exchange for the money.

Due to the popularization of use of the Internet, there is a gradual need for a community-space site on communication networks where a plurality of users freely browse a content created by a user and exchange their opinions on the content, in addition to almost one-way services such as browsing information on homepages or downloading data. If this site is managed, for example, in operating the site for browsing or exchanging music performance data, not only a composition created by a user, but a performance of playing a renowned composition is expected to be provided (uploaded) to site as a content.

At this point, browsing or distributing (downloading) a content via the Internet is an action equivalent to transmitting, copying, or assigning the content which is a work. The site takes an action of distributing a content to other users, and therefore the user contributing the content may wish to obtain some reward from the site due to the download of the content as well as simply publishing the content. Furthermore, if the content is not a work created by the user, but a performance of playing a renowned composition as described by the above example, there is a need for taking some measures such as an individual payment of an equivalent by respective users to other proprietors of the content supplied to the site such as an original writer, a copyright proprietor, and a copyright neighboring proprietor of the renowned composition. If an individual user copes with the proprietors of the content, it would not only make the burden too heavy for the user, but would complicate the related processes.

To resolve these problems, there may be a method of charging a user who has made a request of downloading a content at every download request and distributing the charge to the copyright proprietor and other proprietors for each individual content. This method, however, makes the burden too heavy for general users downloading contents, and it is undesirable as a management form of the above community-space site.

### SUMMARY OF THE INVENTION

It is an object of the present invention to provide a system, a method, a storage medium storing a computer program, or a computer program itself for distributing contents, thereby realizing a community space on communication networks without any illegal infringement on rights of proprietors related to the contents distributed via the communication networks, as well as resolving the above problems.

According to one aspect of the present invention, a content stored in a server is presented together with advertisement information, and regarding the distributed content at least a part of an advertisement fee paid by an advertiser as an equivalent of the advertisement information is allocated to proprietors related to the content.

Specifically, advertisement information supplied by an advertiser is stored, the content distributed to users is stored, the advertisement information is presented to the users, the content is distributed in response to requests from the users, and at least a part of the advertisement fee related to the presentation of the advertisement information paid by the advertiser is allocated to the proprietors of the distributed content.

With these features, regarding the stored content, status information indicative of the presence or absence of proprietors of the content is associated with the content itself before being stored and the allocating is made only at occurrence of a distribution for a content determined to have the proprietors.

Preferably, the content is accepted from the users together with at least the status information of the presence or absence of the proprietors other than the users related to the content, the accepted content is stored together with the status information, and the allocating is made only at occurrence of a distribution of a content determined to have the proprietors.

Furthermore, preferably a plurality of contents having the same proprietor are stored, and at least a part of the advertisement fee related to the presentation of the advertisement information paid by the advertiser is allocated to the same proprietor for the distribution of the plurality of the contents.

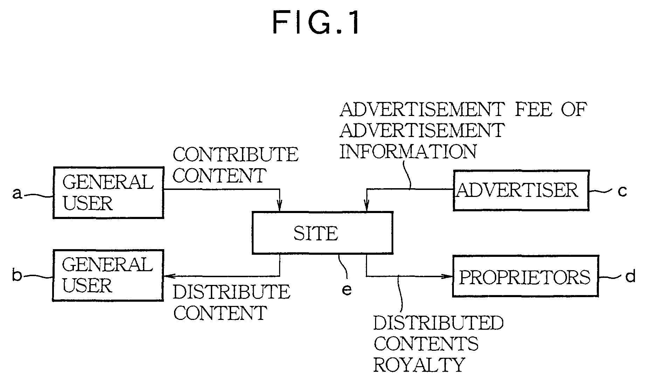

Referring to Fig. 1, there is shown a diagram of a correlation between parties concerned with the present invention. General users a and b upload or download contents, an advertiser c uploads an advertisement to be displayed on a site, proprietors d have rights of a content stored in the site, and the site e publishes the content and distributes information services to the general users a and b or supplies display services of the advertisement to the advertiser c.

As set forth in the above, there exist the general user a supplying a content and other proprietors d (for example, original writer for a case of a secondary work as the content) for the content stored in the site e, and there is a need for paying these proprietors royalties for storing or distributing the content. According to the present invention, the advertisement fee collected from the advertiser c is applied to the royalties, thereby providing a community space where the general users a and b can publish or browse the content freely without various complicated processes related to rights of the content, and without any illegal infringement on the rights of the proprietors d.

### BRIEF DESCRIPTION OF THE DRAWINGS

Fig. 1 is a diagram showing a correlation between parties concerned with the present invention.
Fig. 2 is a diagram showing a system in which a preferred embodiment is applied to the present invention.
Fig. 3 is an explanatory diagram of a basic processing flow between a user terminal and a server.
Fig. 4 is an explanatory diagram of a processing flow in which an advertiser makes application and registration of an advertisement to a site.
Fig. 5 is an explanatory diagram of a processing flow in which a general user makes user registration on the site.
Fig. 6 is a diagram exemplifying a display screen displayed on the user terminal.
Fig. 7 is an explanatory diagram of a processing flow in which the general user uploads the content to the site.
Fig. 8 is a diagram exemplifying a display screen displayed on the user terminal.
Fig. 9 is an explanatory diagram of a processing flow in which a general user downloads the content from the site.
Fig. 10 is a diagram exemplifying a display screen displayed on the user terminal.
Fig. 11 is an explanatory flowchart of processing related to royalties paid to proprietor.

### DETAILED DESCRIPTION OF THE INVENTION

Next, referring to accompanying drawings, there is described a community site which provides a place where general users a and b can publish or browse a content freely by providing services to the general user a for registering the content on the site e free of charge as a compensation for using a space where the user a can publish the content thereof supplied by the site e to other users, by providing services to the general user b for enabling the user b to use the distributed content free of charge, by providing services to an advertiser c for displaying advertisement information for payment, and by paying the content royalties to the proprietors d other than the general user a related to the content registered on the server.

### 1. Hardware configuration

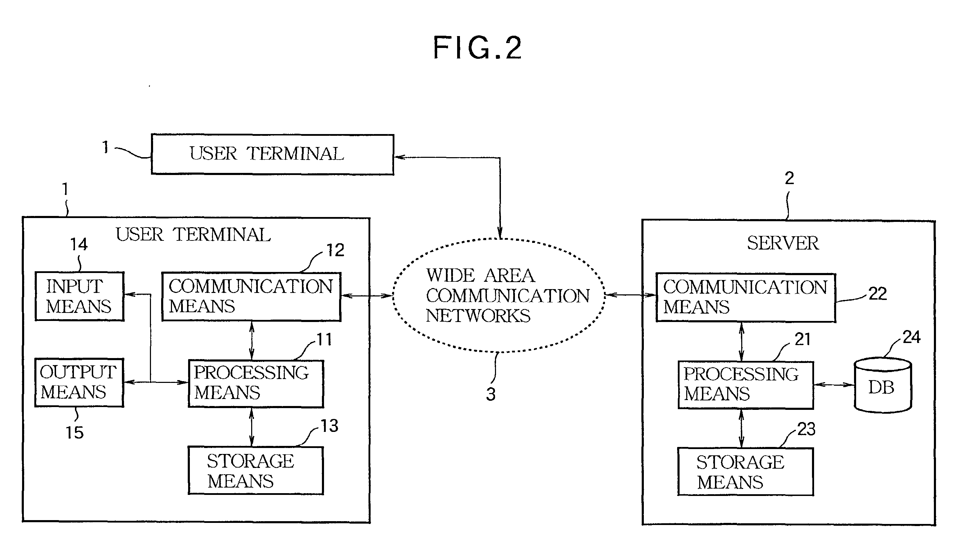

Referring to Fig. 2, there is typically shown a hardware configuration to which the present invention is applied. The present invention is applied to a network system comprising at least one user terminal 1, a server 2, and wide area communication networks capable of exchanging data bidirectionally.

### 1-1. User terminal 1

The user terminal 1 is used by the general user a, the general user b, or the advertiser c, who provides contents to the server 2, browses works (contents) stored in the server 2, or registers an advertisement on the server 2. The terminal 1 comprises at least processing means 11, communication means 12, storage means 13, input means 14, and output means 15.

The communication means 12, which exchanges various data or messages between the user terminal 1 and the server 2 via the wide area communication networks 3, is an interface unit (for example, a modem or a LAN card) corresponding to various protocols for transmitting various data on the wide area communication networks 3. The processing means 11 transmits or receives various data or messages to or from the wide area communication networks 3 via the communication means 12.

The storage means 13, which is a storage device for storing various data or programs, includes read-only and/or readable/writable storage mediums such as a semiconductor memory, a magnetic storage medium, or an optical disk and additional driving devices, and the processing means 11 writes or reads various data or programs to or from the storage means.

The input means 14, which is a device for inputting user's operating instructions, includes a keyboard or the like for inputting characters or the like, a pointing device such as a cursor move key, a mouse, or a tablet, operation buttons for inputting various instructing information, or a device for inputting a user's voice such as a microphone. A user inputs his or her various data or instructions such as an access instruction to the server 2, various information inputs to be registered on the server 2, or an instruction of displaying a work list or of browsing (reproduction, display, etc.) works by using the input means 14.

The output means 15, which is a device for presenting or outputting information to a user, includes a display unit such as a CRT (cathode ray tube) or an LCD (liquid crystal display) for displaying characters or images, a printing unit such as a printer or a plotter for printing characters or images, or a sound generating unit such as a sound source or a sound system for generating musical sounds or voices. A user browses the work list or listens to music works by an output from the output means 15.

The processing means 11, which is a device for controlling operations of the user terminal 1, processes a data transmission instruction from the communication means 12 or received data, writes or reads various data or programs to or from the storage means 13, processes a content inputted by a user with the input means 14, and outputs voices or images to the user with the output means 15. These processes are executed by using various programs stored in the storage means 13.

As the user terminal 1 having these various means coupled organically with each other, there can be a personal computer or a game machine with a communication interface such as a modem, a mobile information terminal such as a mobile telephone or a PDA (personal digital assistants), or a fixed mount type telephone or facsimile. For convenience of the description, however, hereinafter the user terminal 1 is assumed to be a personal computer capable of appropriately decoding and reproducing various data (characters, images, voices, etc.) transmitted from the server 2, having at least a keyboard and a pointing device as the input means 14 and having a display unit such as a CRT or an LCD, a sound source, and a sound system as the output means 15 for concise description of the embodiments.

### 1-2. Server 2

The server 2, which corresponds to the above site e providing the work (contents) registration service, the work distribution service, and the advertisement presentation service, comprises at least processing means 21, communication means 22, storage means 23, and a database 24.

The communication means 22, which exchanges various data or messages between the server 2 and the user terminal 1 via the wide area communication networks 3 in the same manner as for the above communication means 12, is an interface unit (for example, a modem, LAN card, etc.) corresponding to various protocols for transmitting various data on the wide area communication networks. The processing means 21 transmits or receives various data or messages to or from the wide area communication networks 3 via the communication means 22.

The storage means 23, which is a storage device for storing various data or programs, includes read-only and/or readable/writable storage medium such as a semiconductor memory, a magnetic storage medium, or an optical disk and additional driving devices, in the same manner as for the above storage means 13.

The database 24 includes various databases for storing various data related to works (contents), data for presenting information on user terminals, and data related to user authentication, and the processing means 21 appropriately reads out or updates information stored in the databases for administering the server 2. The database 24 can be realized as a part of the storage means 23.

The processing means 21 generates data transmitted from the communication means 22 to the user terminal 1, performs data processing in response to various requests or instructions transmitted from the user terminal 1, or manages and updates information stored in various databases described later and software operating on the processing means 21. The processing means 21 executes management of information or payment of equivalents related to the proprietors d of the work stored in the database 24. These processes are executed by various programs stored in the storage means 23 in the same manner as for the above user terminal 1.

While the server 2 having these various means organically connected to each other is preferably a dedicated server machine having a large storage device and a CPU capable of high-speed processing, a general personal computer may be used instead in view of a tendency of the high performance and low cost of recent CPUs and various peripheral devices. Therefore, hereinafter the server 2 is not particularly specified in the description of this embodiment, while a WWW (World Wide Web) server program is assumed to be operating for transmitting various data in HTTP as described later in the server 2.

Furthermore, kinds of processes to be performed in the server 2 are normally diversified, and therefore they can be administered in the site e side by combining a plurality of devices into a composition according to a type of a process (for example, for an interface to a user, for a database, for user management, for settlement, etc.).

### 1-3. Wide area communication networks 3

For the wide area communication networks 3, there can be used the Internet, a telephone line, or a radio (satellite) communication line, for example, and any form is applicable only if it enables mutual data exchange between the user terminal 1 and the server 2. Therefore, hereinafter types of the wide area communication networks 3 are not particularly identified in the description of this embodiment, while the wide area communication networks 3 are assumed to be capable of exchanging various data at least in the HTTP.

### 2. Content distribution

Next, a concrete description will be given below regarding a content distribution executed in the system comprising the user terminal 1, the server 2, and the wide area communication networks 3 set forth in the above.

### 2-1. Basic process

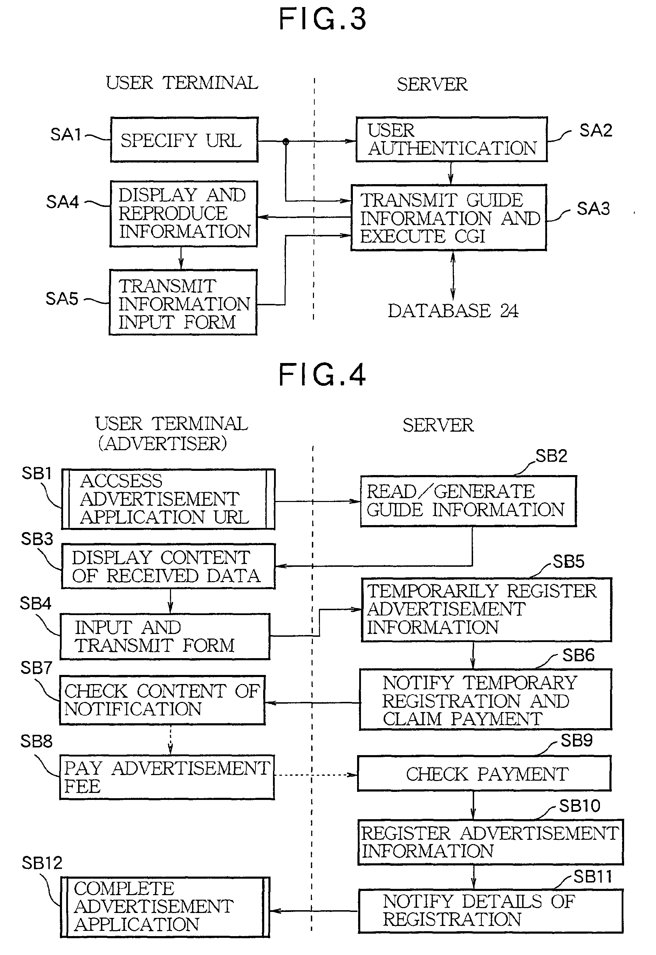

First, referring to Fig. 3, there is described a basic processing flow between the user terminal 1 and the server 2.

The general user a or b or the advertiser c accesses the storage means 13 and activates software (WWW browser) for browsing and displaying various information provided by the WWW server program operating on an arbitrary server, and then specifies a predetermined URL (uniform resource locator) to access a site provided by the WWW server program operating on the server 2 (step SA1).

The WWW server program on the server 2 detects an occurrence of an access, and requests user authentication to the user terminal 1 who has accessed, if necessary (step SA2).

Subsequently, the server 2 reads out information, which is described in HTML or the like corresponding to the accessed URL, the information presenting various objects such as characters, images, or voices singly or in combination to the user who has accessed, or the server 2 generates the information-presenting-data by executing a predetermined CGI (common gateway interface) program or the like stored in the storage means 23, by which the information-presenting-data is transmitted to the user terminal 1 (step SA3). In this process, the database 24 is accessed, if necessary, for reading the information-presenting-data described in HTML or the like transmitted to the user terminal 1 or various information necessary for generating information presenting object or for registering information from a user with an input in a form described later.

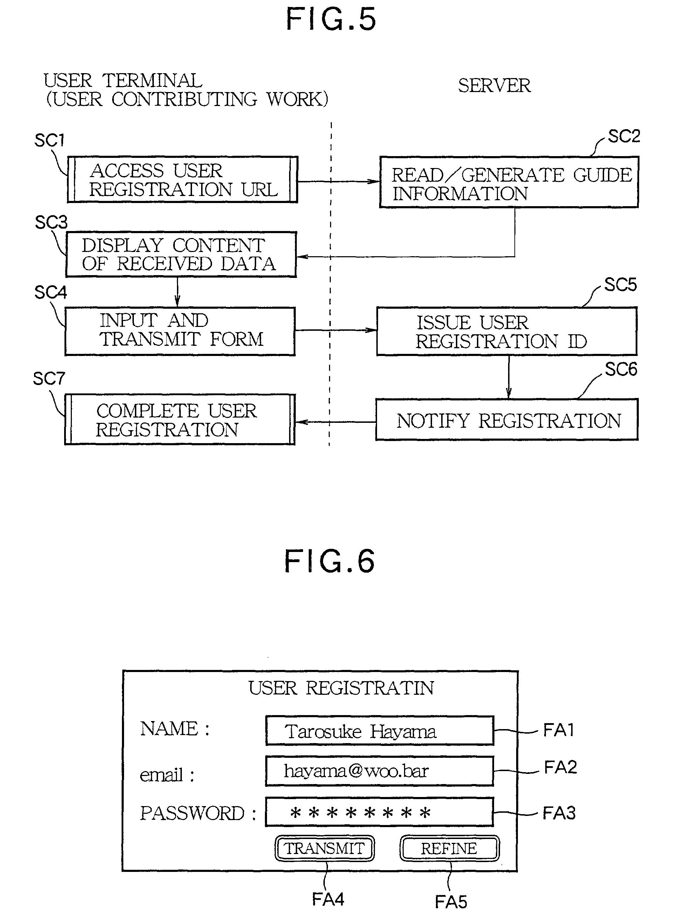

The user terminal 1 receives the information-presenting-data transmitted from the server 2 and perform data processing so that various information or service screens are displayed in the WWW browser on the user terminal 1 in a mode as exemplified in Fig. 6 described later (step SA4). If necessary, information or the like is appropriately inputted in a display area referred to as a form and the inputted form is transmitted to the server 2 (step SA5). The server appropriately executes a predetermined CGI program in response to receipt of the input form (step SA3).

As a consequence of the access request or the form input and transmission from the user terminal 1, the user terminal 1 can receive various services provided by the server 2 through the series of processes between the user terminal 1 and the server 2.

### 2-2. Advertisement application and registration services

Next, referring to Fig. 4, there is shown an advertisement application service provided by the server 2 to a user or an advertiser c.

First, the advertiser c accesses a URL providing an application service of an advertisement message on the server 2 by using the user terminal 1 (step SB1), and in response to the access the server 2 reads information-presenting-data corresponding to the application service of the advertisement display from the database 24, or generates the data with an operation of the CGI program and then transmits the data to the user terminal 1 sequentially (step SB2). While there is not specifically shown an example of a display screen corresponding to the information-presenting-data transmitted at this point, the screen is assumed to include at least information identifying an advertiser (for example, a contact channel such as a company name or an electronic mail address) and a form for prompting an input of advertisement data such as an image to be advertised by the advertiser or a voice. The user terminal 1 used by the advertiser c who has received the information-presenting-data displays an advertisement application screen on a CRT or an LCD which is the output means 15 (step SB3), and the advertiser c inputs necessary items in the form and transmits the form to the server 2 (step SB4).

The server 2 having received the form from the user terminal 1 confirms whether the transmitted information is sufficient; the server 2 terminates the series of advertisement application and registration process at this point if the transmitted information is insufficient, and requests the user terminal 1 to rerun the advertisement application and registration from the beginning or from the input of necessary information into the form. If the transmitted information is sufficient, the server registers the advertisement information temporarily on the database 24 on the basis of the received information (step SB5). The advertisement information on the database 24 is stored with information identifying the advertiser c associated with the advertisement data of the image or voice to be advertised, and has a flag given thereto for setting of whether the advertisement information should be published on the server 2. The advertisement information with the flag indicating that the advertisement should not be published is temporarily registered in the database. The server 2 which has temporarily registered the advertisement information notifies the advertiser c having applied for the advertisement that the advertisement information has been temporarily registered (accepted), and payment of an advertisement fee claimed is prompted (steps SB6 and SB7).

The advertiser c pays the advertisement fee in a predetermined settlement method specified in the claimed advertisement fee notified by the server 2 in the step SB6 (step SB8). At this point, in the settlement method, it is preferable to use network-type electronic money or other electronic settlement techniques in which money is exchanged by using a virtual "wallet" prepared on the computer network from a viewpoint of simplification of processing, while it is possible to use an existing settlement method such as a direct deposit. The server 2 permanently registers the temporarily registered advertisement information (in other words, the flag is set to indicate that the information should be published) in response to a confirmation of the payment from the advertiser c (step SB9). At least a part of the advertisement fee paid from the advertiser c is allocated to a payment of the royalty to proprietors as described later. Therefore, the site e stores information related to the amount of the advertisement fee paid from the advertiser c in the database 24 on the server 2. The advertisement information for which the advertiser c was regularly registered in the database 24 can be appropriately published by the server 2 (step SB10). The advertiser c is notified by the server 2 that the advertisement information has been regularly registered, by which the series of advertisement application and registration processes are completed (steps SB11 and SB12).

Unless payment of the advertisement fee from the advertiser c can be confirmed when a predetermined period (for example, a week) is elapsed after the advertisement information is temporarily registered in the step SB5, the temporarily registered advertisement information can be automatically deleted from the database 24.

In addition, it is possible to submit a contract for displaying an advertisement on the server 2 with the information-presenting-data transmitted in the step SB2 or in a temporarily registration notification transmitted in the step SB6, and to temporarily register the advertisement information after that the advertiser c agree with the contract. Furthermore, an effective period of the advertisement information can be defined as the contract to control the display of the registered advertisement information only during the effective period.

### 2-3. Services to general users

Services provided by the server 2 to general users are mainly classified into two types, a service of providing contents created by a user on the server 2 and publishing the contents on the server 2 (upload service) and another service of appropriately distributing contents stored in the server 2 (download service). Hereinafter, the upload service and the download service will be described below by giving an example of browsing or exchanging music performance as a content.

### 2-3a. Upload service

Referring to Fig. 5 to Fig. 8, there is described a service that a general user a provides a digital content to the site e (upload service). In this embodiment, the server 2 requests the general user a the user registration before uploading the content to place restrictions on uploading service so that only the registered user can upload the content.

Referring to Fig. 5, there is described a process of the user registration. First, the general user a accesses a URL providing the user registration service on the server 2 by using the user terminal 1 (step SC1), and in response to the access the server 2 reads out information-presenting-data corresponding to the user registration service from the database 24 or generates the data by a CGI program operation and then transmits the data to the user terminal 1 sequentially (step SC2). The user terminal 1 used by the general user a who has received the information-presenting-data displays a user registration screen as shown in Fig. 6 on a CRT or an LCD which is the output means 15 (step SC3), and the general user a inputs a user name FA1, an electronic mail address FA2, and a desired password FA3, which are necessary items, into a predetermined area of a displayed form by using the input means 14 such as a keyboard or a mouse. The inputted information is encoded in a predetermined format and transmitted to the server 2 with a click on a button FA4 where "transmit" is labeled with a pointing device (step SC4), and the input content is reset to an initial status (for example, all null status) with a click on a button FA5 where "refine" is printed.

The server 2 which has received the information inputted in the form confirms whether the transmitted information is sufficient; if the transmitted information is insufficient, a series of the user registration processes are terminated at this point, and the server 2 requests the user terminal 1 to rerun the access to the user registration service from the beginning or from the input of various information into the form (not shown). If the transmitted information is sufficient, user information is generated on the basis of this information (issuing a user ID for identifying a user and setting a password for checking that the user ID corresponds to a regular registrant, etc.) and is registered on the database (step SC5). The general user a is notified of a completion of the user registration (steps SC6 and SC7), by which the user registration of the general user a is completed. The user who has completed the user registration in this manner can upload the content to the server 2.

In the same manner as for the advertisement application and registration services, it is possible to submit a contract for publishing a content on the server 2 in the information-presenting-data transmitted in the step SC2 or in a registration notification transmitted in the step SC6 and to perform an input of information related to the user registration after that the general user a agrees with the contract.

In addition, information required to be inputted by the general user a at the user registration is not limited to the above example, but other various information (for example, age, gender, portrait photograph, self-introduction, etc.) can be inputted.

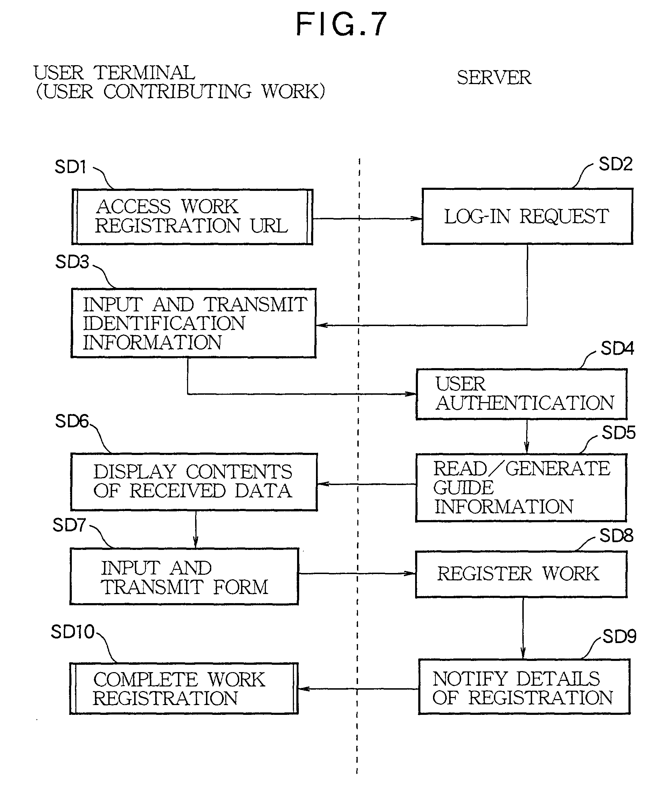

Subsequently, referring to Fig. 7, a description is made on a process in which the general user a uploads the content to the server 2.

First, the general user a accesses the URL providing the work registration service of the server 2 by using the user terminal 1 (step SD1), and in response to the access the server 2 requests a user authentication from the user terminal 1 which has accessed (step SD2). The general user a inputs the authentication information (typically, a user ID and a password) by using the user terminal 1 and transmits the same to the server 2 (step SD3), and the server 2 determines whether there exists a registered user corresponding to the inputted authentication information, by which the user authentication is performed (step SD4).

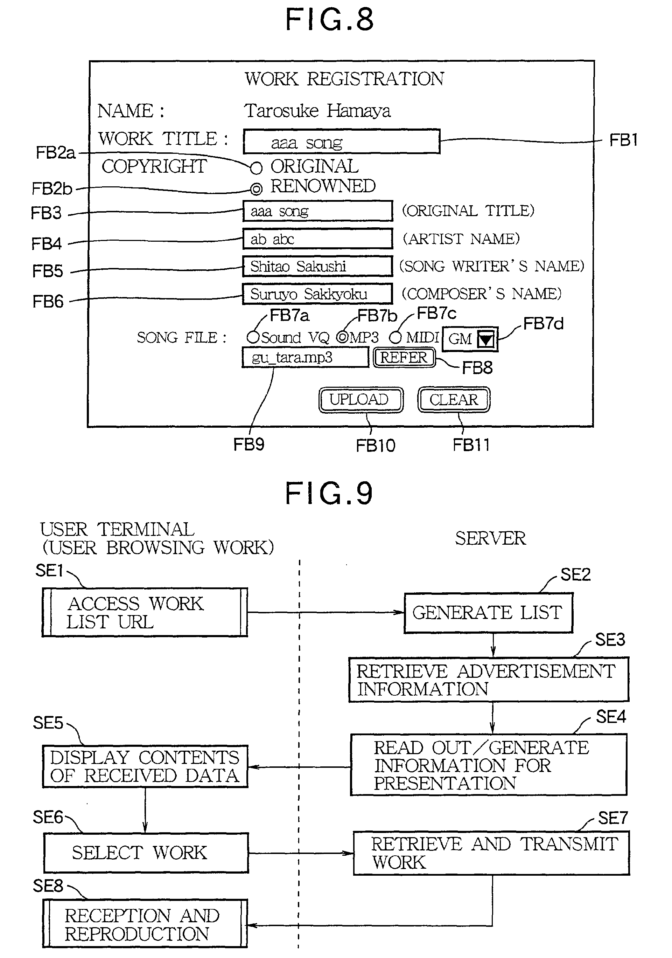

If the user is determined to be unregistered as a result of the user authentication, a series of the work registration processes are terminated at this point and the server 2 requests the user terminal 1 to rerun the access to the work registration service from the beginning or from the input of the authentication information (not shown). If the user is determined to be registered as a result of the user authentication, the server 2 reads out information-presenting-data corresponding to the work registration service from the database 24 and sequentially transmits the data to the user terminal 1 (step SD5). The WWW browser on the user terminal 1 which has received the information-presenting-data displays a work registration screen as shown in Fig. 8 on a CRT or an LCD which is the output means 15 (step SC3), and prompts the general user a to specify information of a work to be uploaded and the work to be uploaded.

In Fig. 8, FB1 designates an area for inputting a work title of a content, and the general user a inputs a work title of the content appropriately in this input area. FB2a and FB2b designate radio buttons for specifying whether any other proprietors d exist regarding the content (for example, whether it is a renowned composition). In Fig. 8, an existence of other proprietors (renowned composition) is specified. FB3 to FB7 designate areas for inputting information of the work which is a base of the content, and the general user a inputs an original music piece name FB3, an artist name FB4 who plays the original piece, a songwriter FB5, and a composer FB6, for example.

FB7a and FB9 designate areas for inputting information related to the content to be uploaded. FB7a to FB7d designate radio buttons and selectors for specifying data formats of the content alternatively. In Fig. 8, the user is prompted to select one of three types of Sound VQ (a registered trademark of Yamaha Corporation, which is a sound data compression system, MP3 (MPEG audio layer 3) which is also the sound data compressing system, or MIDI (musical instruments digital interface) which is a performance data recording system. There are several standards for MIDI and therefore the selector FB7d is provided to make selectable a standard corresponding to the content. FB8 and FB9 are used for providing a function of selecting a content registered on the server 2 from the storage means 13 of the user terminal 1. A file stored in the storage means 13 can be referenced and selected in response to a click of the button FB8 where "Refer" is printed with a pointing device or the like, and the selected file is indicated in the display area FB9. Additionally, the content can be selected by specifying a file name directly in the area FB9.

Regarding the information inputted in the above form, the content displayed at FB9 and selected is encoded into a predetermined format together with other information inputted in the form, and is transmitted to the server 2 (step SD7) in response to a click of the button FB1 where "Upload" is printed with a pointing device such as a mouse, and the input content is reset to an initial status (for example, all null status) with a click on the button FB11 where "Clear" is printed.

The server 2 separates the received data into at least a content and other information, and confirms whether the received information is sufficient; if the received information is insufficient, the server 2 terminates a series of the work registration processes at this point, and requests the user terminal 1 to rerun the work upload processing from the beginning or from the input of various information in the form (not shown). If the received information is sufficient, the server registers the content, other received information, and information appropriately appended on the server 2 (an ID uniquely identifying the content, an uploading date, a published date, a file size, etc.) on the database 24 such that all information are associated with each other (step SD8). Subsequently, the server notifies the user terminal 1 that the uploaded content has been registered on the database 24 (steps SD9 and SD10), thereby completing the upload of the content from the general user a.

When the content is registered in the step SD8, the proprietor d of the content is also identified. The database 24 stores information of the proprietor d (for example, name of the proprietor d and his settlement method) and information of a content whose rights are owned by the proprietor d, all of the information being associated with each other, and the general user a finds a match between the information of the uploaded content inputted into FB2 and FB6 and the information of the proprietor d and of the content whose rights are owned by the proprietor d stored in the database 24, and then identifies the proprietor d (not shown).

At this point, the proprietor d corresponding to the information stored in the database 24 is assumed to make a contract or an agreement previously with the site e regarding notifications of the information of the content whose rights are owned by the proprietor d and a calculation method or a settlement method of a charge for downloading the information of the content whose rights are owned by the proprietor d, and the content of the contract or agreement is assumed to be stored as associated information. If the content whose proprietor d cannot be identified at the site e (for example, a content whose rights are owned by proprietors not registered on the database 24) though an existence of any other proprietors is shown by the general user a, the download of the content may have high probability of infringing various rights of the proprietors and therefore this kind of content can be controlled not to be published.

In the same manner as for the advertisement application and registration services, it is possible to include a contract for publishing the content on the server in the information-presenting-data transmitted in the step SD5 or in the registration notification transmitted in the step SD9 to make the general user a agree with the contract before inputting the information of the content or registering the content.

Furthermore, the information required to be inputted by the general user a at the content registration is not limited to the above example, but various information (for example, a music genre of the content, a type of instrument in use, etc.) can be inputted.

### 1-3b. Download service

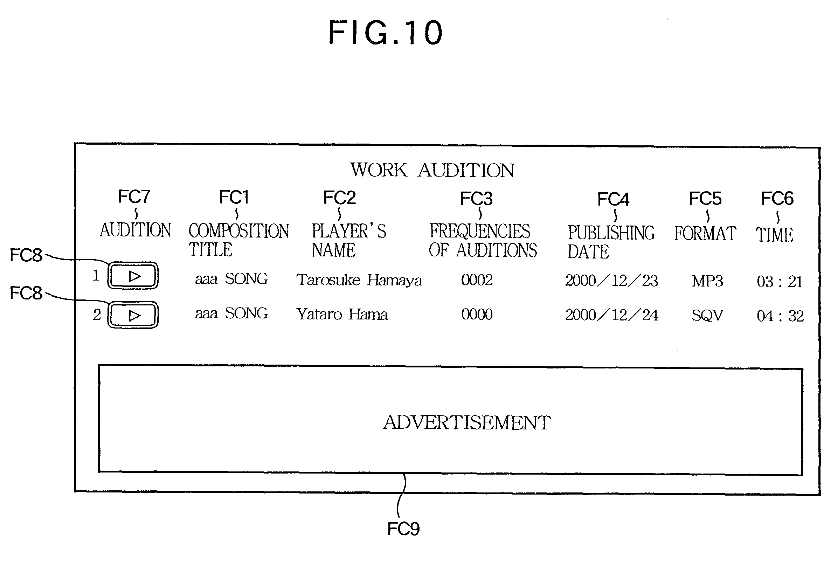

Referring to Fig. 9 and Fig. 10, there is described a service in which a general user b receives a distribution of a content stored in the server 2 (download service).

First, the general user b accesses a URL providing a work list of the server 2 by using the user terminal 1 (step SE1), and the server 2 acquires a list of contents registered at that time and publishable from the database 24 in response to this access (step SE2). Subsequently, the server 2 reads out the advertisement information registered on the application server 2 from the database 24 (step SE3), and transmits information-presenting-data including the content list and the advertisement information to the user terminal 1 (step SE4). The user terminal 1 having received the information-presenting-data displays the work list screen as shown in Fig. 10 on a CRT or an LCD which is the output means 15 (step SE5).

Referring to Fig. 10, there is shown an example of the work list screen where two contents are displayed; various information of each content is displayed in the column direction in a matrix to display these two contents. A column FC1 is an area for displaying a composition title inputted by the general user a who has uploaded the content, a column FC2 is an area for displaying a name of the user (player's name) who registered the content, a column FC3 is an area for displaying a distribution count (the number of auditions) indicating how many times the corresponding content has ever been downloaded, a column FC4 is an area for displaying a content published date appropriately appended by the server in response to an upload of the corresponding content, a column FC5 is an area for displaying a data format of the content selected by the general user a who has uploaded the content ("MP3" indicates that the data format is MP3 and "SVQ" indicates that the data format is Sound VQ), and a column FC6 is an area for displaying a reproduction time of the content appropriately appended by referring to data of the content in the server 2 in response to the upload of the content. A display area FC9 at the bottom of the list screen is an area for disposing advertisement information registered by the advertiser c. The number of listed contents is not limited to two, but a desired number of contents can be displayed and other information (for example, a music genre) be displayed for each content, and the content list need not be limited to the display form shown in Fig. 10, but can be displayed in a desired form.

In the column FC7, reproduction buttons FC8 given marks or other information useful to identify the contents stored in the database 24 are displayed correspondingly to respective contents. With a click on one of the reproduction buttons FC8 using a mouse, a downloaded content is selected and the download request is transmitted to the server 2 (step SE6). The server 2 updates a value corresponding to the download count of the content stored in the database 24 in response to receipt of the download request from the user terminal 1, reads out the corresponding content from the database 24, and transmits the content to the user terminal 1 (step SE7), and the transmitted content is received and reproduced by the user terminal 1 (step SE8), thereby completing the download of the content for the general user b.

In the same manner as for the advertisement application and registration services, it is possible to include a contract for publishing a content on the server 2 in the information-presenting-data transmitted in the step SE4 to make the general user b agree with the contract before the download of the content.

In addition, various data stored in the database 24 and transmitted to the general user b (advertisement information registered by the advertiser c, the content uploaded by the general user a, etc.) can be given digital watermark information indicating a writer or a proprietor of the content when the content is stored in the database 24 or when the content is transmitted to the general user b so that an illegal use can be detected after the fact. Particularly, it is preferable to perform predetermined encryption (scramble processing) or the like for the content to be uploaded by the general user a, to convert the content into a format enabling a reproduction only by a predetermined reproduction program specified by the site e, and to provide the content to the general user b. While the predetermined reproduction program can be one provided as a plug-in for adding a function to the WWW browser or can be an application operating independently of the WWW browser, it is preferable to reproduce or use sequentially the received content without retaining the content permanently on the user terminal 1 used by the general user b by reproducing the content in a stream distribution system.

### 2-4. Payment of royalties

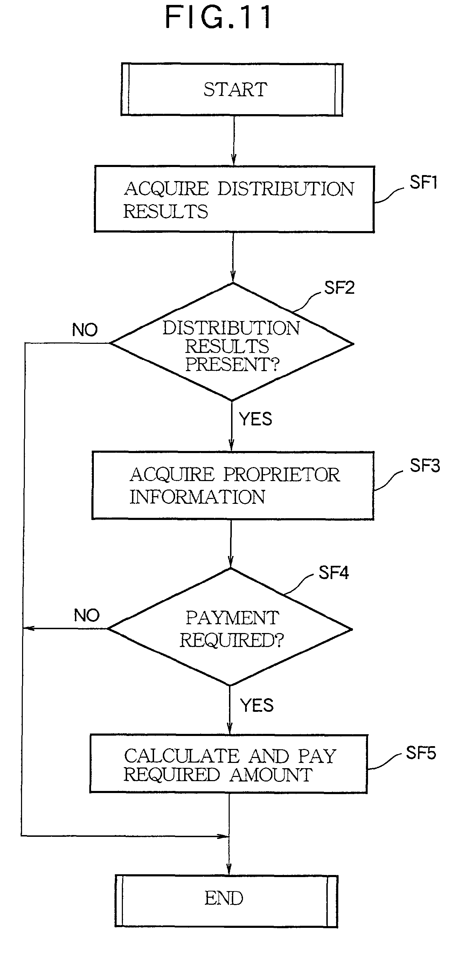

Next, referring to Fig. 11, there is described processing of paying a royalty for using the content to the proprietors of the contents stored in the server 2. The payment of the royalty for using the content to the proprietors is executed regularly, for example, every month for the contents stored in the database 24.

First, regarding the content to be processed, it is determined whether the content is distributed anew after the previous processing (step SF1). This determination is made, for example, by acquiring the distribution count of the content to be processed from the database 24 and by detecting whether there is any change from the distribution count of the previous processing. As a result of this determination, if it is determined that there is no distribution (step SF2: No), the content charge or the like need not be paid in this processing, and therefore the processing of the content is terminated. On the other hand, if it is determined that there is a distribution (step SF2: Yes), proprietor information of the content is acquired from the database 24 (step SF3). The proprietor information in this embodiment is information indicative of whether there are any proprietors of the content specified by the general user a with the radio buttons FB2a and FB2b in the upload service.

If the proprietor information shows there are not any proprietors (step SF4: No), no charge need be paid in this case, thereby terminating the processing for the content. On the other hand, if the information shows any proprietor d exist (step SF4: Yes), there is a need for paying royalties to the proprietor d, and therefore information of the proprietor d and a calculation method of the charge for use contracted between the proprietor d and the site e is appropriately read from the database 24 to calculate the charge for use, and to pay the calculated charges to the proprietor d (step SF5). The payment method may be the electronic settlement method, a direct deposit, or other predetermined payment methods contracted between the proprietors and the site e. Additionally at the payment of the royalties, the proprietor d is notified of the content to be paid and the distribution count of the content, to thereby clarify the details of the payment.

The royalty calculation method can be, for example, a method of integrating a predetermined amount according to the download count of the content, a method of summing up a predetermined amount independently of the download count of the content, or a method of summing up a predetermined amount independently of the number of downloaded contents or the download count of the content even if an identical proprietor has rights for a plurality of contents, and the predetermined amount can be, for example, a permanently fixed amount, an amount of a predetermined ratio in the advertisement fee from the advertiser c, or a combination of these. The calculation method of the royalties or the payment method thereof can be permanently fixed for all the proprietors, or different methods among respective proprietors can be applied to them.

### 2-5. Effects of embodiment

According to the above embodiment, the general user a can leave processing for other proprietors of the content to the site e regarding the content uploaded to the site e, and therefore the user a is required to have the minimum consideration related to the content to be uploaded, by which he or she can upload his- or her-own made content to the site e freely.

Furthermore, the general user b can receive a download service of the content without compensation at downloading the content from the site e, since a charge for downloading the content is paid from the advertisement fee collected from the advertiser c by the site e, by which the user b can download the content published at the site e freely.

Still further, the advertiser c can advertise to a lot of users at the expense of the advertisement fee, since the site e provides the community space having a centripetal force to the general user a or the general user b.

In addition, for the proprietor d, it is determined whether the content registered on the site e is related to the rights owned by the proprietor d, and the site e pays his or her royalties appropriately according to the download of the content, by which the proprietor d can appropriately get a profit naturally gained by the rights of the proprietor d regarding the content.

### 3. Alteration

While the charges for downloading the content stored in the server 2 are paid only to the proprietor d of the content other than the general user a having uploaded the content in the above embodiment, the general user a having uploaded the content can be included in the proprietors. At this point, the royalties paid to the general user a can be paid in a predetermined payment method by an amount appropriately calculated based on the content distribution result in the same manner as one described in Section 2-4 in the above.

This enables the general user a to use a site for widely publishing the content generated by the user, and to gain some reward additionally by a download of the content from the site e, by which the site e becomes worth using for the general user a.

In this case, it is also possible to make the general user a select whether he or she requires shares of the above royalties for the content to be uploaded at the user registration or at the content upload to perform the calculation and payment of the royalties only for the general user a requiring the shares of the royalties.

While various information is exchanged in HTTP between the site e and the general users a and b or the advertiser c in the above embodiment, the communication protocol is not limited to HTTP, but any protocol can be used only if various data can be exchanged between the site e and the users such as FTP (file transfer protocol), SMTP (simple mail transfer protocol)/POP (post office protocol), or data broadcasting, and a plurality of communication modes or communication protocols can be combined for the data exchange. The HTTP and other protocols set forth in the above embodiment are used for exchanging data basically in plain text, and information exchanged with the site e may be leaked to the third party. Therefore, from a viewpoint of protecting users' privacies, all or part of the data transmission between the site e and users can be executed in a data transmission protocol in SSL (secure sockets layer) or other encrypted format.

In addition, while the general user b accesses the URL providing a work list, and the advertisement information is presented only when the content list is displayed in the above embodiment, the presentation of the advertisement information is not limited to this, but it can be appropriately displayed also at the user registration, the content registration, or the advertisement application and registration. Furthermore, if the user terminal 1 supports a concurrent display of a plurality of display screens of GUI (graphical user interface) or the like, the display screen for presenting the advertisement information can be controlled to be displayed in the user terminal 1. Still further, if there are a plurality of pieces of advertisement information to be presented to the users in such a case of a plurality of advertisers c exist, these pieces of advertisement information can be presented on the user terminal 1 in the order of registration, or at random, or in the order of low frequency of presentation at every access to the server 2.

Furthermore, while the present invention has been described in connection with preferred embodiments and alternations, the present invention is not limited to these embodiments and alternations, but the hardware, processing procedures, and the like can be appropriately modified and processing on the server 2 described by referring to the drawings can be appropriately modified in the content or order of the processing.

For example, the information-presenting-data transmitted from the server 2 to the user terminal 1 is not limited to data described in the HTML language, but it can include a script program or an applet executable on the user terminal 1, for example, in order to detect a lack of the form input content or to execute a part of processing such as an arrangement control of the displayed content by using the script program or the applet operating on the user terminal 1.

In addition, while the user terminal 1 is a personal computer in the description of the above embodiment, it can be a game machine, a mobile information terminal such as a mobile telephone or a PDA, a fixed mount type telephone or facsimile, or a kiosk-type terminal equipment installed at a store, or otherwise it can be a combination of a plurality of these terminals as set forth in the above. If the plurality of terminals are combined as the user terminal 1, the server 2 can run server programs corresponding to respective types of the terminals, if necessary. Furthermore, preferred work presentation forms or work browsing forms can be provided for respective types of the terminals.

The present invention set forth in the above is embodied by a system for distribution the contents, a method for distributing the contents, a recording medium storing a computer program for distributing the contents, the computer program transmitted on a transmission medium, or the computer program itself.

According to the present invention set forth hereinabove, the general user a can register the content on the site e with the minimum load on the general user a even if a copyright proprietor or the like of the content exists. In addition, the content can be provided without compensation for the general user b, thereby reducing the expense to the minimum for the general user b. For the advertiser c, the site e manages the space having a centripetal force for the general user a or the general user b, by which the advertiser c can advertise to a lot of users. Furthermore, the proprietor d of the content can get royalties for downloading the content appropriately.

Therefore, it is possible to realize a community space site on the communication networks where a plurality of users freely browse a content created by a general user and they exchange opinions on the content without illegal infringement on rights of proprietors d of the content stored in the site, as well as almost one-way services for browsing information posted on the homepage or downloading data.

## Claims

1. A system for managing an information service which handles distribution of digital contents and presentation of advertising messages to users over a computer network, the system comprising:
a first database containing advertising messages provided from advertisers who subscribe the information service with payment of advertisement fees;
a second database containing a plurality of digital contents which are subject to legal protection on behalf of content proprietors;
a presenting means for presenting the advertising messages over the computer network to the users who use the information service;
a distributing means for distributing the digital contents to the users upon request from the users over the computer network; and
an allocating means for allocating at least a part of the advertisement fees collected from the subscribing advertisers to the content proprietors of the digital contents distributed to the users.

2. The system according to claim 1, wherein the second database contains protected digital contents subject to legal protection and non-protected digital contents not subject to legal protection, such that the allocating means allocates the collected advertisement fees to the proprietors only when the protected digital contents are distributed to the users.

3. The system according to claim 1, further comprising a contributing means for contributing digital contents from users together with status information indicating whether or not the contributed digital contents are subject to the legal protection, and a registering means for registering the contributed digital contents into the second database together with the status information, such that the allocating means allocates the collected advertisement fees only if the registered digital contents are distributed under the legal protection as indicated by the status information.

4. The system according to claim 1, wherein the second database contains a multiple of digital contents subject to legal protection on behalf of the same proprietor, such that the allocating means allocates a part of the collected advertisement fees to the same proprietor when any of the multiple of the digital contents is distributed to the users.

5. A method of managing an information service which handles distribution of digital contents and presentation of advertising messages to users over a computer network, the method comprising the steps of:
creating a first database containing advertising messages provided from advertisers who subscribe the information service with payment of advertisement fees;
creating a second database containing a plurality of digital contents which are subject to legal protection on behalf of content proprietors;
presenting the advertising messages over the computer network to the users who use the information service;
distributing the digital contents to the users upon request from the users over the computer network; and
allocating at least a part of the advertisement fees collected from the subscribing advertisers to the content proprietors of the digital contents distributed to the users.

6. The method according to claim 5, wherein the second database contains protected digital contents subject to legal protection and non-protected digital contents not subject to legal protection, such that the allocating of the collected advertisement fees to the proprietors is effected only when the protected digital contents are distributed to the users.

7. The method according to claim 5, further comprising the steps of contributing digital contents from users together with status information indicating whether or not the contributed digital contents are subject to the legal protection, and registering the contributed digital contents into the second database together with the status information, such that the allocating of the collected advertisement fees is effected only if the registered digital contents are distributed under the legal protection as indicated by the status information.

8. The method according to claim 5, wherein the second database contains a multiple of digital contents subject to legal protection on behalf of the same proprietor, such that a part of the collected advertisement fees is allocated to the same proprietor when any of the multiple of the digital contents is distributed to the users.

9. A machine readable medium for use in a server having a CPU and managing an information service which handles distribution of digital contents and presentation of advertising messages to users over a computer network, the medium containing program instructions executable by the CPU for causing the server to perform a method comprising the steps of:
managing a first database containing advertising messages provided from advertisers who subscribe the information service with payment of advertisement fees;
managing a second database containing a plurality of digital contents which are subject to legal protection on behalf of content proprietors;
presenting the advertising messages over the computer network to the users who use the information service;
distributing the digital contents to the users upon request from the users over the computer network; and
allocating at least a part of the advertisement fees collected from the subscribing advertisers to the content proprietors of the digital contents distributed to the users.

10. The machine readable medium according to claim 9, wherein the second database contains protected digital contents subject to legal protection and non-protected digital contents not subject to legal protection, such that the allocating of the collected advertisement fees to the proprietors is effected only when the protected digital contents are distributed to the users.

11. The machine readable medium according to claim 9, wherein the method further comprises the steps of contributing digital contents from users together with status information indicating whether or not the contributed digital contents are subject to the legal protection, and registering the contributed digital contents into the second database together with the status information, such that the allocating of the collected advertisement fees is effected only if the registered digital contents are distributed under the legal protection as indicated by the status information.

12. The machine readable medium according to claim 9, wherein the second database contains a multiple of digital contents subject to legal protection on behalf of the same proprietor, such that a part of the collected advertisement fees is allocated to the same proprietor when any of the multiple of the digital contents is distributed to the users.

13. A computer program executable by a server for managing an information service which handles distribution of digital contents and presentation of advertising messages to users over a computer network, the computer program comprising the steps of:
managing a first database containing advertising messages provided from advertisers who subscribe the information service with payment of advertisement fees;
managing a second database containing a plurality of digital contents which are subject to legal protection on behalf of content proprietors;
presenting the advertising messages over the computer network to the users who use the information service;
distributing the digital contents to the users upon request from the users over the computer network; and
allocating at least a part of the advertisement fees collected from the subscribing advertisers to the content proprietors of the digital contents distributed to the users.

14. The computer program according to claim 13, wherein the second database contains protected digital contents subject to legal protection and non-protected digital contents not subject to legal protection, such that the allocating of the collected advertisement fees to the proprietors is effected only when the protected digital contents are distributed to the users.

15. The computer program according to claim 13, further comprising the steps of contributing digital contents from users together with status information indicating whether or not the contributed digital contents are subject to the legal protection, and registering the contributed digital contents into the second database together with the status information, such that the allocating of the collected advertisement fees is effected only if the registered digital contents are distributed under the legal protection as indicated by the status information.

16. The computer program according to claim 13, wherein the second database contains a multiple of digital contents subject to legal protection on behalf of the same proprietor, such that a part of the collected advertisement fees is allocated to the same proprietor when any of the multiple of the digital contents is distributed to the users.
